# EUROPÄISCHE PATENTSCHRIFT

(11) **EP 1 698 796 B1**
(45) Veröffentlichungstag und Bekanntmachung des Hinweises auf die Patenterteilung: **27.08.2008**
(21) Anmeldenummer: 06003765.2
(22) Anmeldetag: 24.02.2006
(51) Int. Cl.: F16D 66/02, B60T 17/22

(54) **Verfahren zur Herstellung eines Sensors zur Erfassung der Abnutzung eines Bremsbelages eines Fahrzeuges**
Method of fabrication of a wear sensor for a vehicle brake lining
Procédé de fabrication d'un capteur d'usure de garniture de frein de véhicule

(30) Priorität: 01.03.2005 DE 102005009123
(43) Veröffentlichungstag der Anmeldung: 06.09.2006
(73) Patentinhaber: Hirschmann Automotive GmbH, 6830 Rankweil-Brederis (AT)
(72) Erfinder: Wille, Manuel, 6830 Rankweil (AT); Jäger, Günter, 6840 Götzis (AT); Gächter, Oliver, 6820 Koblach (AT)
(74) Vertreter: Thul, Hermann

(56) Entgegenhaltungen:
- EP-A- 0 742 380
- EP-A- 0 916 868
- DE-C1- 19 822 168
- US-B1- 6 338 397
- PATENT ABSTRACTS OF JAPAN Bd. 015, Nr. 466 (P-1280), 26. November 1991 (1991-11-26) & JP 03 199902 A (SUMITOMO WIRING SYST LTD), 30. August 1991 (1991-08-30)

## Beschreibung

Die Erfindung betrifft ein Verfahren zur Herstellung eines Sensors zur Erfassung der Abnutzung eines Bremsbelages eines Fahrzeuges gemäß den Merkmalen des Oberbegriffes des Patentanspruches 1.

Ein gattungsbildender Sensor zur Erfassung der Abnutzung eines Bremsbelages eines Fahrzeuges ist aus der DE 198 22 168 C1 bekannt. Dieser Sensor weist einen Kontaktbereich auf, mit dem der Sensor zur Anlage an den Bremsbelag kommt und mit weitergehender Abnutzung des Bremsbelages ein Signal erzeugen kann, welches einer nachgeschalteten Auswerteeinrichtung zugeführt wird, um aus der Abnutzung bzw. einem erreichten Abnutzungsgrad ein Wamsignal zu erzeugen. In dem Kontaktbereich ist eine Leiterplatte angeordnet, auf der Leiterbahnen angeordnet sind, wobei die Leiterbahnen einschließlich der Leiterplatte mit fortschreitender Abnutzung des Bremsbelages ebenfalls abgeschliffen werden. Dies führt nach einer gewissen Dauer dazu, dass die in einem Stromkreis des nachgeschalteten Auswertegerätes liegende Leiterbahn den Stromkreis nicht mehr schließt, sondern dieser geöffnet wird. Dies ist dann ein Signal dafür, dass der Bremsbelag einen bestimmten Abnutzungsgrad erreicht hat. Wenn dieser Abnutzungsgrad erreicht ist, erzeugt das nachgeschaltete Auswertegerät einen Hinweis an den Fahrer des Fahrzeuges, dass eben ein bestimmter Abnutzungsgrad des Bremsbelages erreicht ist und ein Auswechseln des Bremsbelags ratsam wäre.

Dokument EP-A-0 742 380 zeigt die konstruktive Ausgestaltung eines mehrstufigen verschlussgebers für Bremsbeläge.

Auf Grund unterschiedlicher Fahrwerksgeometrien unterschiedlicher Fahrzeuge sind die Einbauorte für den Sensor äußerst unterschiedlich. Dies führt bei dem bekannten Sensor zum Nachteil, dass alle Bauteile des Sensors auf die unterschiedlichen Einbauorte angepasst werden müssen. So sind zum einen verschiedene Geometrien der Leiterplatte erforderlich, um überhaupt die Abnutzung des Bremsbelages erfassen zu können. Diese unterschiedlichen Geometrien der Leiterplatte führen dazu, dass auch unterschiedliche Gehäuseformen hergestellt werden müssen. Ein weiterer Nachteil besteht darin, dass die Leiterplatte mit den kontaktierten Kabeln zum Anschluss des Sensors an das nachgeschaltete Auswertegerät in einem Gehäuse untergebracht werden muss, welches aus mehreren Teilen besteht, die dichtend miteinander werden müssen, um ein Eindringen von äußeren Einflüssen, die im Fahrwerksbereich herrschen, in die Innerei des Gehäuses (insbesondere der Leiterplatte zu verhindern. Damit besteht also der bekannte Sensor zur Erfassung der Abnutzung eines Bremsbelags eines Fahrzeuges aus einer Vielzahl von Teilen, muss für jeden Einbauort des Sensors einzeln angepasst werden und bedingt einen hohen Montageaufwand.

Der Erfindung liegt daher die Aufgabe zu Grunde, ein Verfahren zur Herstellung eines Sensors zur Erfassung der Abnutzung eines Bremsbelages eines Fahrzeuges bereitzustellen, mit dem die eingangs geschilderten Nachteile vermieden werden.

Diese Aufgabe der Erfindung ist durch die Merkmale des Patentanspruches 1 gelöst.

Erfindungsgemäß ist vorgesehen, dass das Gehäuse des Sensors in einem Spritzgussverfahren aus einem hitzebeständigen Kunststoff hergestellt wird und der Abgangsbereich des Sensors dem Einbauort des Sensors angepasst wird. Die Herstellung des Gehäuses in einem Spritzgussverfahren aus einem hitzebeständigen Kunststoff hat den Vorteil, dass sämtliche Bauteile des Sensors (quasi sein Innenleben) nach dessen Herstellung mit dem hitzebeständigen Kunststoff umspritzt werden, so dass alle Bereiche, insbesondere der Abgangsbereich mit den Kabeln, dichtend verschlossen sind und äußere Umwelteinflüsse, die im Fahrwerksbereich des Fahrzeuges herrschen, nicht mehr zu einer Beeinträchtigung der Funktion des Sensors führen können. Das Gehäuse besteht aus einem hitzebeständigen Kunststoff, da im Bereich der Bremsanlage des Fahrzeuges hohe Temperaturen herrschen, denen der Sensor widerstehen muss. Ein weiterer Vorteil des Spritzgussverfahrens ist der, dass es automatisiert durchgeführt werden kann, wozu zur Herstellung des Gehäuses nur noch dieser einzige Schritt des Spritzens erforderlich ist. Ein weiterer Vorteil der Erfindung ist darin zu sehen, dass das Innenleben des Sensors so gestaltet ist, dass es für alle erforderlichen Einbauorte gleich ist und nur das Gehäuse bzw. dessen Abgangsbereich dem Einbauort des Sensors anpassbar ist. Dies erfolgt durch eine einfache Änderung der Werkzeuge für das Spritzgussverfahren, wobei auch hier denkbar ist, dass für eine Grundform, die für alle Einbauorte gleich ist, ein Grundwerkzeug verwendet wird und ein Werkzeug, mit dem der Abgangsbereich erzeugt wird, dem Grundwerkzeug angepasst wird, um unterschiedliche Abgangsbereiche herstellen zu können.

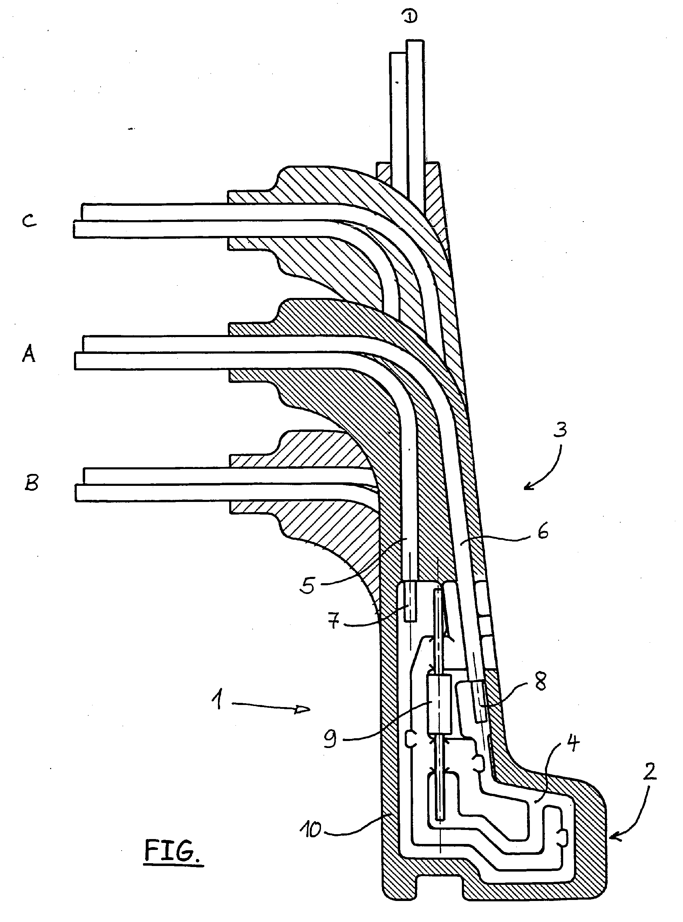

Ein Ausführungsbeispiel der Erfindung ist im Folgenden beschrieben und anhand der Figur erläutert.

In der Figur ist ein Sensor 1 zur Erfassung der Abnutzung eines Bremsbelages eines Fahrzeuges im Schnitt dargestellt. Dieser Sensor 1 weist einen Kontaktbereich 2 auf, in dem der Sensor 1 zur Anlage an den Bremsbelag (hier nicht dargestellt) kommt. In etwa dem Kontaktbereich 2 abgewandt ist ein Abgangsbereich 3. Das "Innenleben" des Sensors 1 besteht in besonders vorteilhafter Weise aus einem Stanzgitter 4, das in einem Stanzverfahren oder gegebenenfalls in einem Stanzbiegeverfahren aus einem Blechstreifen herstellbar ist. Das bedeutet, dass das Stanzgitter 4 aus einem elektrisch leitenden Material hergestellt ist. Das Stanzgitter 4 verläuft im Kontaktbereich 2 zweistufig, das bedeutet, dass das in einem Stromkreis liegende Stanzgitter 4 zunächst bei Abnutzung des Bremsbelages an seiner vorderen Stirnseite abgeschliffen und bei Erreichen eines bestimmten Abnutzungsgrades des Bremsbelages vollkommen verschwindet, so dass diese erste Stufe eine Änderung der Leitfähigkeit (Widerstandswert) des Stanzgitters 4 zur Folge hat, wie von einem nachgeschalteten Auswertegerät erfassbar ist. Nachdem diese erste Stufe des Stanzgitters 4 abgeschliffen wurde, erfolgt ein Hinweis an den Fahrer des Fahrzeuges, dass ein Austausch der Bremsbeläge nach bestimmten Vorschriften des Fahrzeugherstellers angebracht erscheint. Werden diese Hinweise von dem Fahrer ignoriert, erfolgt ein weiteres Abschleifen der zweiten Stufe des Stanzgitters 4, so dass dann ein weiterer Warnhinweis ergehen kann, wenn auch diese zweite Stufe des Stanzgitters 4 abgeschliffen ist und damit der Stromkreis insgesamt geöffnet ist. In diesem Fall ergeht an den Fahrer des Fahrzeuges der dringende Hinweis, die Bremsbeläge möglichst umgehend wechseln zu lassen. In der vorangegangenen Beschreibung und in der Figur ist das Stanzgitter 4 zweistufig ausgebildet, wobei es auch einstufig oder mehr als zweistufig ausgebildet sein kann. Bei einem zwei- oder mehrstufigen Stanzgitter 4 ist es auch denkbar, mehr als ein Stanzgitter 4 einzusetzen und diese in unterschiedlichen Ebenen anzuordnen.

Im Abgangsbereich 3 des Sensors 1 sind Kabel 5, 6 zum Anschluss des Sensors 1 an ein nachgeschaltetes Auswertegerät an dem Stanzgitter 4 kontaktiert. Diese Kontaktierung 7, 8 erfolgt dadurch, dass die Kabel 5, 6 an ihren Enden von ihrer isolation befreit werden und die elektrischen Leiter der Kabel 5, 6 im Bereich der Kontaktierung 7, 8 mit dem Stanzgitter 4 kontaktiert werden. Dieses kann beispielsweise durch Löten, Laserschweißen, Krimpen oder dergleichen erfolgen. Je nach Funktion des Sensors 1 und dem nachgeschalteten Auswertegerät kann der Sensor 1 auch noch zumindest ein elektrisches Bauteil 9 beinhalten.

Damit besteht also das Innenleben des Sensors 1 aus den vorgefertigten Bauteilen: Stanzgitter 4, Kabel 5, 6 und ggf. den zumindest einen elektrischen Bauteil 9. In erfindungsgemäßer Weise ist nun dieses Innenleben, insbesondere die geometrischen Erstreckungen des Stanzgitters 4 so gestaltet, dass es allen Einbauorten z. B. eines Fahrzeugherstellers entspricht. Damit entfällt das Erfordernis, dass dieses Innenleben des Sensors 1 unterschiedlichen Modellen eines Fahrzeugherstellers angepasst werden muss. Nachdem die Bauteile des Innenlebens des Sensors 1 vorgefertigt und zusammengebaut worden sind, erfolgt die Anbringung eines Gehäuses 10, nämlich in einem Spritzgussverfahren aus einem hitzebeständigen Kunststoff. Dadurch wird der gesamte Sensor 1 mit dem hitzebeständigen Kunststoff umgeben und vor äußeren Umwelteinflüssen geschützt. Ein weiterer Vorteil ist der, dass durch entsprechende Verwendung von Werkzeugen für das Spritzgussverfahren der Abgangsbereich 3 den jeweiligen Einbauorten des Sensors 1 anpassbar ist. So ist in der Figur (eng schraffiert) eine Variante A des Gehäuses 10 gezeigt, die beispielsweise den Einbauort des Sensors eines bestimmten Fahrzeugmodells eines Fahrzeugherstellers entspricht. Soll der in der Figur gezeigte Sensor 1 mit gleichem Innenleben bei anderen Fahrzeugmodellen eines Fahrzeugherstellers oder auch bei anderen Fahrzeugherstellern eingesetzt werden, wird das Werkzeug für das Spritzgussverfahren zur Herstellung des Gehäuses 10 dahingehend geändert, dass der Abgangsbereich 3 andere Formen (z. B. die in der Figur gezeigten Varianten B, C oder D) realisiert. Damit steht in vorteilhafter Weise ein überwiegend gleichbauender Sensor 1 zur Verfügung, dessen Abgangsbereich 3 durch Änderungen des Werkzeuges für das Spritzgussverfahren den unterschiedlichen Einbauorten des Sensors 1 angepasst ist. Erfindungsgemäss wird zur Herstellung eines Teilbereiches des Gehäuses 10, nämlich in dem Bereich des Stanzgitters 4, ein Grundwerkzeug verwendet welches für alle Varianten des Sensors 1 gleich ist. Für die unterschiedlichen Varianten A bis D des Abgangsbereiches 3 werden entsprechend ausgebildete Zusatzwerkzeuge für das Sprüzgussverfahren verwendet, die beim Spritzgussvorgang zusammen mit dem Grundwerkzeug eingesetzt werden.

Der Sensor 1 ist also in seinem Abgangsbereich so gestaltet (insbesondere auch abgewinkelt), dass er nicht über die äußeren Konturen des Bremssattels hinausragt. Damit wird verhindert, dass er durch aufgeschleuderte Dreckteile, Schnee oder Eis abgerissen wird, da die nebenliegenden Schenkel des Bremssattels Schutz bieten. Das Gehäuse 10 des Sensors 1 weist für die Montage zum Beispiel Einbuchtungen ein, mit denen er über Ausbuchtungen am Bremsbelag, genauer an der sogenannten Rückenplatte des Bremsbelages, montiert (aufgesteckt, festgeklipst) wird. Zur Erhöhung der Montagesicherheit kann dabei noch ein Federelement zwischengebracht werden.

### Bezugszeichenliste

- 1.: Sensor
- 2.: Kontaktbereich
- 3.: Abgabgsbereich
- 4.: Stanzgitter
- 5.: Kabel
- 6.: Kabel
- 7.: Kontaktierung
- 8.: Kontaktierung
- 9.: elektrisches Bauteil
- 10.: Gehäuse

## Patentansprüche

1. Verfahren zur Herstellung eines Sensors (1) zur Erfassung der Abnutzung eines Bremsbelages eines Fahrzeuges mit einem Kontaktbereich, in dem der Sensor zur Anlage an den Bremsbelag kommt, und einem Abgangsbereich (3), aus dem Kabel (5,6) zum Anschluss des Sensors an ein nachgeschaltetes Auswertegerät aus einem Gehäuse des Sensors herausgeführt sind, wobei das Gehäuse des Sensors in einem Spritzgussrrerfahren aus einem hitzebeständigen Kunststoff hergestellt wird, **dadurch gekennzeichnet, dass** der Abgangsbereich (3), aus dem Kabel zum Anschluss des Sensors herausgeführt sind, **dadurch** an unterschiedliche Einbauorte des Sensors angepasst wird; dass eine Grundform, die für alle Einbauorte gleich ist, ein Grundwerkzeug verwendet wird und ein weiteres Werkzeug, mit dem der Abgangsbereich erzeugt wird, dem Grundwerkzeug angepasst wird, um die unterschiedlichen Abgangsbereiche herzustellen.

## Claims

1. Method for producing a sensor (1) for sensing the wear of a brake lining of a vehicle, comprising a contact area in which the sensor comes to bear against the brake lining, and an exiting area (3), from which cables (5, 6) for the connection of the sensor to a downstream evaluation device are led out from a housing of the sensor, the housing of the sensor being produced from a heat-resistant plastic in an injection-moulding process, **characterized in that** the exiting area (3) from which cables for the connection of the sensor are led out is adapted to different installation locations of the sensor by using a basic mould for a basic form that is the same for all installation locations and by adapting a further mould, with which the exiting area is created, to the basic mould in order to produce the different exiting areas.

## Revendications

1. Procédé de fabrication d'un capteur (1) pour détecter l'usure d'une garniture de frein d'un véhicule avec une région de contact dans laquelle le capteur vient en appui contre la garniture de frein, et une région de départ (3), de laquelle des câbles (5, 6) pour le raccordement du capteur à un appareil d'analyse monté en aval sont guidés hors d'un boîtier du capteur, le boîtier du capteur étant fabriqué dans un procédé de moulage par injection à partir d'un plastique résistant à la chaleur, **caractérisé en ce que** la région de départ (3) de laquelle sont guidés des câbles pour le raccordement du capteur est adaptée à des sites de montage différents du capteur de telle sorte que pour une forme de base, qui est identique pour tous les sites de montage, on utilise un outil de base, et qu'un autre outil, avec lequel la région de départ est produite, soit adapté à l'outil de base pour fabriquer les différentes régions de départ.
